(19) Europäisches Patentamt
European Patent Office
Office européen des brevets

(11) **EP 0 777 695 B2**

(12) **NEUE EUROPÄISCHE PATENTSCHRIFT**

(45) Veröffentlichungstag und Bekanntmachung des Hinweises auf die Entscheidung über den Einspruch:
**17.03.2004 Patentblatt 2004/12**

(45) Hinweis auf die Patenterteilung:
**02.12.1998 Patentblatt 1998/49**

(21) Anmeldenummer: **95929868.8**

(22) Anmeldetag: **14.08.1995**

(51) Int Cl.[7]: **C08G 18/72**, C08G 18/76, C08G 18/79, C08G 18/78, C08G 18/80, C08G 18/10, C08G 18/28, C09J 175/04 // (C08G18/72, 101:00)

(86) Internationale Anmeldenummer:
**PCT/EP1995/003216**

(87) Internationale Veröffentlichungsnummer:
**WO 1996/006124 (29.02.1996 Gazette 1996/10)**

(54) **POLYURETHAN-ZUSAMMENSETZUNGEN MIT NIEDRIGEM GEHALT AN MONOMEREN DIISOCYANATEN**

POLYURETHANE COMPOSITIONS HAVING A LOW CONTENT OF MONOMER DIISOCYANATES

COMPOSITIONS DE POLYURETHANNE A FAIBLE TENEUR EN DIISOCYANATES MONOMERES

(84) Benannte Vertragsstaaten:
**AT BE CH DE DK ES FR GB GR IT LI NL PT SE**

(30) Priorität: **22.08.1994 DE 4429679**
**11.11.1994 DE 4440322**
**18.11.1994 DE 4441190**
**23.11.1994 DE 4441570**
**24.11.1994 DE 4441770**

(43) Veröffentlichungstag der Anmeldung:
**11.06.1997 Patentblatt 1997/24**

(73) Patentinhaber: **Henkel Kommanditgesellschaft auf Aktien**
**40191 Düsseldorf (DE)**

(72) Erfinder:
• **KREBS, Michael**
**D-40724 Hilden (DE)**

• **BOLTE, Gerd**
**D-40789 Monheim (DE)**
• **DERNST-MENTGES, Christa**
**D-69181 Leimen (DE)**
• **HENKE, Günter**
**D-41470 Neuss (DE)**
• **KLAUCK, Wolfgang**
**D-40670 Meerbusch (DE)**
• **KLUTH, Hermann**
**D-40595 Düsseldorf (DE)**
• **SCHUMANN, Manfred**
**D-69121 Heidelberg (DE)**

(56) Entgegenhaltungen:
**EP-A- 0 105 242        EP-A- 0 273 836**
**EP-A- 0 294 110        EP-A- 0 316 738**
**EP-A- 0 393 903        EP-A- 0 537 602**
**WO-A-94/18256         DE-A- 3 245 678**
**GB-A- 834 917**

**Beschreibung**

Die Erfindung betrifft die Verwendung von Zusammensetzungen auf der Basis von Prepolymeren, hergestellt aus Polyolen und Polyisocyanaten mit niedrigem Gehalt an monomeren Diisocyanaten, als reaktiver Schmelzklebstoff, Kaschierklebstoff, Kleb-/Dichtstoff, reaktiver Primer (Voranstrich) oder Schaumkunststoff aus Einweg-Druckbehältern, sowie deren Herstellung.

Reaktive Polyurethan-Schmelzklebstoffe im Sinne dieser Erfindung sind feuchtigkeitshärtende bzw. feuchtigkeitsvernetzende Klebstoffe, die bei Raumtemperatur fest sind und in Form ihrer Schmelze appliziert werden, und deren polymere Bestandteile Urethangruppen sowie reaktionsfähige Isocyanatgruppen enthalten. Durch das Abkühlen dieser Schmelze erfolgt zunächst eine rasche physikalische Abbindung des Schmelzklebstoffes, gefolgt von einer chemischen Reaktion der noch vorhandenen Isocyanatgruppen mit Feuchtigkeit aus der Umgebung zu einem vernetzten unschmelzbaren Klebstoff.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert, eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und, bei den zweikomponentigen Systemen, die zweite Komponente Polymere bzw. Oligomere enthält, die Hydroxylgruppen, Aminogruppen, Epoxygruppen und/oder Carboxylgruppen tragen. Bei diesen zweikomponentigen Systemen werden die Isocyanatgruppenhaltige Komponente und die zweite Komponente unmittelbar vor der Applikation gemischt, im Normalfall mit Hilfe eines Misch- und Dosiersystems.

Reaktive Polyurethan-Kleb-/Dichtmassen, insbesondere einkomponentig-feuchtigkeitshärtende Systeme, enthalten in der Regel bei Raumtemperatur flüssige Polymere mit Urethangruppen und reaktionsfähigen Isocyanatgruppen. Für viele Anwendungsfälle sind diese Massen lösungsmittelfrei und sehr hochviskos und pastös, sie werden bei Raumtemperatur oder bei leicht erhöhter Temperatur zwischen etwa 50°C und 80°C verarbeitet.

Feuchtigkeitshärtende bzw. feuchtigkeitsvernetzende Polyurethan-Primer sind Primer, deren polymere Bestandteile Urethangruppen sowie reaktionsfähige Isocyanat-gruppen enthalten. In der Regel sind diese Zusammensetzungen lösungsmittelhaltig und werden bei Raumtemperatur appliziert. Um das Abdampfen der Lösungsmittel zu beschleunigen, können die mit dem Primer vorgestrichenen Substrate ggf. leicht erwärmt werden.

Schaumkunststoffe aus Einweg-Druckbehältern im Sinne dieser Erfindung werden am Ort ihrer Verwendung erzeugt, man spricht daher auch von einem Ortschaum (DIN 18159), insbesondere handelt es sich hier um feuchtigkeitshärtende Einkomponenten-Systeme. Die zu verschäumende Zusammensetzung befindet sich dabei in der Regel in Einweg-Druckbehältern (Aerosol-Dosen). Diese Schäume aus Polyurethan dienen vor allem im Bauwesen zum Dichten, Dämmen und Montieren, z.B. von Fugen, Dachflächen, Fenstern und Türen.

Bei allen diesen Anwendungsfeldern werden reaktive Polyurethanzusammensetzungen auf der Basis von Prepolymeren aus Polyolen und Polyisocyanaten sowie weiteren Zusätzen verwendet. Bei den einkomponentigen Formulierungen reagieren die noch vorhandenen Isocyanat-gruppen mit der Feuchtigkeit aus der umgebenden Luft unter Vernetzung und -im Falle der Schäume- unter Volumenvergrößerung. Bei den zweikomponentigen Systemen erfolgt die chemische Aushärtung unter Molekülvergrößerung bzw. -vernetzung mit den Hydroxylgruppen, Aminogruppen, Epoxygruppen oder Carboxylgruppen der zweiten Reaktivkomponente.

Die reaktiven Polyurethanzusammensetzungen für die oben genannten Anwendungsfelder zeichnen sich durch ein sehr hohes Leistungsprofil aus. Daher konnten in den letzten Jahren zunehmend neue Anwendungen für diese Klebstoffe, Dichtstoffe, Schaumstoffe oder Primer erschlossen werden. Zusammensetzungen für derartige Klebstoffe, Dichtstoffe, Schaumstoffe oder Primer sind bereits aus sehr vielen Patentanmeldungen und sonstigen Veröffentlichungen bekannt.

Neben vielen Vorteilen weisen diese Polyurethan-Zusammensetzungen auch einige systembedingte Nachteile auf. Einer der gravierendsten Nachteile ist der Restmonomergehalt an Polyisocyanaten, insbesondere der flüchtigeren Diisocyanate. Klebstoffe, Dichtstoffe und insbesondere die Schmelzklebstoffe werden bei erhöhter Temperatur verarbeitet. Schmelzklebstoffe werden beispielsweise zwischen 100°C und 170°C verarbeitet, Kaschierklebstoffe zwischen 70°C und 150°C, in diesem Temperaturbereich weisen die monomeren Diisocyanate einen merklichen Dampfdruck auf. Primer werden üblicherweise per Sprühauftrag verarbeitet. Die bei all diesen Applikationsformen entstehenden Isocyanatdämpfe sind wegen ihrer reizenden und sensibilisierenden Wirkung toxisch, daher müssen Schutzmaßnahmen zur Verhütung von Gesundheitsschäden für die mit der Verarbeitung beauftragten Personen ergriffen werden. Diese Maßnahmen, wie z.B. die Überwachungspflicht, ob die maximale Arbeitsplatzkonzentration nicht überschritten wird, Absaugung der Dämpfe an der Entstehungs- und Austrittsstelle, sind sehr kostenintensiv und behindern zudem einige Auftragsverfahren, wie z.B. den Sprühauftrag der reaktiven Polyurethanzusammensetzungen. Auf die spezielle Problematik bei den Polyurethan-Schaumstoffen aus Aerosoldosen wird später noch eingegangen.

Für alle genannten Anwendungsfelder ist daher die Entwicklung von reaktiven Polyurethan-Zusammensetzungen mit drastisch reduziertem Anteil an monomeren Diisocyanaten in hohem Maße wünschenswert und ermöglicht zum Teil erst deren Einsatz bei vielen Applikationen, bei denen aus den oben erläuterten Gründen bisher der Einsatz nicht möglich war.

Zur Lösung dieses Problems wurden bisher bereits mehrere Wege beschritten:

Nach der Schulz-Flory-Statistik ist bei der Verwendung von Diisocyanaten mit Isocyanat-Gruppen gleicher Reaktivität der Gehalt an monomerem Diisocyanat im Reaktionsprodukt vom NCO/OH-Verhältnis bei der Prepolymer-Synthese abhängig:

$$\beta = \left[ \frac{\alpha - 1}{\alpha} \right]^2$$

wobei β der Gehalt an monomerem Diisocyanat und α das NCO/OH-Verhältnis ist (Siehe z.B. R. Bonart, P. Demmer, GPC-Analyse des Gehaltes an monomerem Diisocyanat in Prepolymeren von segmentierten Polyurethanen, Colloid & Polymer Sci. 260,518-523 (1982)). Bei einem NCO/OH-Verhältnis von 2, wie es häufig für die Prepolymerzusammensetzung notwendig ist, verbleiben 25 % des eingesetzten Diisocyanates als Monomer im Prepolymer. Werden beispielsweise 10 Gew. % Diphenylmethan-Diisocyanat (MDI) zur Prepolymersynthese bei einem NCO/OH-Verhältnis von 2 eingesetzt, so findet man in Übereinstimmung mit der obigen statistischen Abschätzung größenordnungsmäßig ca. 2 Gew.% monomeres MDI im Prepolymeren. Bei einer Applikationstemperatur von 150°C hat das MDI bereits einen Dampfdruck von etwa 0,8 mbar. Bei den oben beschriebenen Applikationsbedingungen, insbesondere bei der großflächigen Applikation als Klebstoff in dünner Schicht, gelangen erhebliche Mengen dieses Restmonomers in den darüberliegenden Luftraum und müssen durch Absaugung entfernt werden.

Um diesen Monomergehalt um eine Zehnerpotenz zu reduzieren, müßte das NCO/OH-Verhältnis drastisch auf etwa 1,19 reduziert werden. Dies ist aber in der Praxis in aller Regel nicht durchführbar, weil das durchschnittliche Molekulargewicht dann exponentiell ansteigen würde und die daraus resultierenden Polyurethan-Zusammensetzungen extrem hochviskos würden und nicht mehr zu verarbeiten wären. In der Praxis geht man daher bei der Prepolymer-Synthese auch andere Wege. So wird zum Beispiel mit einem ausreichend hohen NCO/OH-Verhältnis synthetisiert und das monomere Di-oder Polyisocyanat nach der Prepolymerisierung in einem 2. Schritt entfernt, zum Beispiel durch

- Destillation im Vakuum (Dünnschichtverdampfer), siehe z.B. Kunststoff-Handbuch Band 7, Polyurethane G.W. Becker (Herausgeber), Hanser Verlag München, 3. Auflage 1993, Seite 425

- Nachträgliche chemische Bindung des monomeren Di- bzw. Polyisocyanates z.B. durch partielle Trimerisierung und Aufarbeitung des Reaktionsgemisches siehe zum Beispiel Zitat aus loc.cit., Seite 97: K.C. Frisch, S.L. Reegen (Herausgeber): Advances in Urethane Science and Technologie, Band 1-7, Technomic, Westport Conn., 1971-1979.

Diese Verfahren werden zum Beispiel bei der Herstellung von niederviskosen Addukten bzw. lösungsmittelhaltigen Addukten wie beispielsweise Härtern für Lackbindemittel angewendet. Im Falle der hochviskosen Polyurethanklebstoffe haben sie wegen des notwendigen hohen technischen Aufwandes keine Bedeutung erlangt.

Es bestand daher die Aufgabe, die Verwendung einer reaktive Polyurethan-Zusammensetzung bereizustellen, deren Gehalt an monomeren, flüchtigen Isocyanaten (im wesentlichen Diisocyanaten) so niedrig ist, daß bei deren Anwendung aus Gründen der Arbeitssicherheit keine aufwendige Absaugung oder andere Schutzmaßnahme notwendig ist. Im Falle der Schaumkunststoffe soll die Entsorgung von Resten dieser Prepolymeren, die in den Einweg-Druckbehältern verbleiben, problemlos sein. Auf diese spezielle Problematik wird später eingegangen.

Erfindungsgemäß wurde diese Aufgabe dadurch gelöst, daß die verwendete reaktive Komponente der Zusammensetzung aus Prepolymeren auf der Basis von Diolen und/oder Polyolen und Polyisocyanaten besteht, wobei die Polyisocyanate eine Isocyanatfunktionalität von $3 \pm 0,7$ haben und weniger als 20 Gew.% an Diisocyanat enthalten, und wobei der Anteil an tetrafunktionellen Isocyanaten nicht mehr als 12 gew.% und der Anteil an höherfunktionellen Polyisocyanaten nicht mehr als 2 gew.% des Polyisocyanat gemisches beträgt. Gegebenenfalls kann die Funktionalität des Polyisocyanates durch den Zusatz von monofunktionellen Verbindungen (Abbrechern) auf den gewünschten Bereich eingestellt werden. Der Gehalt an Diisocyanat-Monomeren im Prepolymeren bzw. in der Zusammensetzung wird mit Hilfe der HPLC bestimmt (High Pressure Liquid Chromatography).

Bevorzugte erfindungsgemäß Verwendete Zusammensetzungen sind in den Ansprüchen 2 bis 5 beschrieben. Gegenstand der Erfindung sind auch die Verwendungen der Zusammensetzungen und die Kunststoffschäume gemäß den Ansprüchen 6 bis 17.

Überraschenderweise führt die Verwendung von Diolen und/oder Polyolen und derartigen Polyisocyanaten mit einer Funktionalität deutlich über 2 bei der Prepolymerherstellung nicht zu einer vorzeitigen Vernetzung bzw. Gelbildung, so daß diese Zusammensetzungen eine geeignete Viskosität zur Herstellung von Schmelzklebstoffen, Kaschierklebstoffen, Kleb-/Dichtstoffen, Primern und Schaumkunststoffen aufweisen.

Als Polyisocyanate kommen dabei hauptsächlich aromatische Triisocyanate in Frage wie zum Beispiel der Thiophosphorsäure-tris-(p-Isocyanato-Phenylester), das Triphenylmethan-4,4',4''-Triisocyanat sowie insbesondere die verschiedenen isomeren trifunktionellen Homologen des Diphenylmethandiisocyanats (MDI). Zu den letzteren gehören hauptsächlich das Isocyanto-bis-((4-Isocyanatophenyl)= methyl)-benzol, das 2-Isocyanato-4-(((3-Isocyanato-phenyl)= methyl)-1-((4-Isocyanatophenyl)methyl)-benzol, das 4-Isocyanato-1,2-bis((4-Isocyanatophenyl)methyl)-benzol, das 1-Isocyanato-4-((2-Isocyanatophenyl)methyl)-2-((3-Isocyanatophenyl)methyl)benzol, das 4-isocyanato-α-1-(o-Isocyanatophenyl)-α 3(p-Isocyanatophenyl)-m-Xylol, das 2-Isocyanato-α-(o-Isocyanatophenyl)-α'(p-Isocyanatophenyl) m-Xylol, das 2-Isocyanato-1,3-bis((2-Isocyanatophenyl)methyl)-benzol, das 2-Isocyanato-1,4-bis((4-Isocyanato-phenyl)methyl)-benzol, das Isocyanato-bis((Isocyanatophenyl)methyl)-benzol, das 1-Isocyanato-2,4-bis((bis((4-Isocyanatophenyl) methyl)-benzol sowie deren Mischungen, gegebenenfalls mit einem geringfügigem Anteil an höherfunktionellen Homologen. Da die trifunktionellen Homologen des Diphenylmethandiisocyanates analog zum Diphenylmethandiisocyanat durch Kondensation von Formaldehyd mit Anilin mit nachfolgender Phosgenierung hergestellt werden, sind im technischen Gemisch der trifunktionellen Homologen des MDI auch noch Anteile an Diisocyanat vorhanden, dieser darf jedoch nicht mehr als 20 Gew. %, bezogen auf die Isocyanatmischung, betragen. Der Anteil an Tetraisocyanaten in diesem Homologen-Gemisch darf nicht mehr als 12 Gew.% und der Anteil an Polyisocyanaten mit einer Funktionalität > 4 nicht mehr als 2 Gew.% betragen.

Weiterhin sind als Triisocyanate auch Addukte aus Diisocyanaten und niedermolekularen Triolen geeignet, insbesondere die Addukte aus aromatischen Diisocyanten und Triolen wie zum Beispiel Trimethylolpropan oder Glycerin. Auch bei diesen Addukten gelten die oben genannten Einschränkungen bezüglich des Diisocyanatgehaltes sowie des Gehaltes an Polyisocyanaten mit einer Funktionalität >3.

Auch aliphatische Triisocyanate wie zum Beispiel das Biuretisierungsprodukt des Hexamethylendiisocyanates (HDI) oder das Isocyanuratisierungsprodukt des HDI oder auch die gleichen Trimerisierungsprodukte des Isophorondiisocyanats (IPDI) sind für die erfindungsgemäße Verwendung der Zusammensetzungen geeignet, sofern der Anteil an Diisocyanaten <0,5 Gew. % beträgt und der Anteil an Tetra- bzw. höherfunktionellen Isocyanaten nicht mehr als 14 Gew.% ist.

Die Viskosität der reaktiven Komponente kann ggf. mit monofunktionellen Verbindungen (Abbrechern) mit gegenüber Isocyanatgruppen reaktiven Gruppen eingestellt werden.

Der Zusatz von monofunktionellen Verbindungen zu Isocyanatgruppen-haltigen Prepolymeren ist im Prinzip bereits bekannt, so beschreibt die EP-A-125008 ein Verfahren zum Kleben von Sohlen an Schuhoberteilen. Bei dem dort beschriebenen Klebstoff wird zunächst ein Diisocyanat mit einem im wesentlichen linearen hydroxyfunktionellen Polyester so umgesetzt, daß ein Prepolymer mit reaktiven Isocyanat-Endgruppen entsteht. Als weitere Komponente enthält dieser Schmelzklebstoff eine monofunktionelle Verbindung. Diese monofunktionelle Verbindung ist in dem Schmelzklebstoff in einer Menge enthalten, die ausreicht, um mit bis zu 40 Mol% der Isocyanatgruppen des Prepolymers zu reagieren. Es wird angegeben, daß die monofunktionelle Verbindung einen wesentlichen Einfluß auf den Erhalt der Hitzeaktivierbarkeit der dort beschriebenen Klebstoffzusammensetzung hat. Durch dieses Verfahren wird der Gehalt an monomerem Diisocyanat jedoch nur in sehr untergeordnetem Maße reduziert, da die monofunktionelle Verbindung in erster Näherung gleich schnell sowohl mit den monomeren Isocyanatgruppen als auch mit den Polymergebundenen Isocyanatgruppen reagiert.

Erfindungsgemäß sind als monofunktionelle Verbindungen (Abbrecher) solche Verbindungen geeignet, die gegenüber Isocyanaten reaktive Gruppen mit einer Funktionalität von 1 haben. Grundsätzlich sind hierfür alle monofunktionellen Alkohole, Amine oder Mercaptane verwendbar, dies sind insbesondere monofunktionelle Alkohole mit bis zu 36 Kohlenstoffatomen, monofunktionelle primäre und/oder sekundäre Amine mit bis zu 36 Kohlenstoffatomen oder monofunktionelle Mercaptane mit bis zu 36 Kohlenstoffatomen. Es können aber auch Mischungen von Poly-Alkoholen, Poly-Aminen und/oder Poly-Mercaptanen als Abbrecher verwendet werden, solange deren durchschnittliche Funktionalität unter 2 liegt. Besonders bevorzugt sind zum Beispiel Monoalkohole wie Benzylalkohol, Fettalkohole mit 8 bis 18 Kohlenstoffatomen, wie sie zum Beispiel unter dem Handelsnamen Lorol der Fa. Henkel erhältlich sind, Abietylalkohol bzw. hydrierter Abietylalkohol. Die Abietylalkohole erfüllen dabei die Doppelfunktion des Kettenabbruchs und dienen gleichzeitig als chemisch gebundene "Tackifier". Auch der Zusatz von Mercapto- oder Aminosilanen kann eine Doppelfunktion als Kettenabbrecher und als Haftvermittler erfüllen.

Mit Hilfe der oben genannten Abbrecher kann die effektive Funktionalität des Trisosocyanats auf einen Wert zwischen 1,3 und 3,45 eingestellt werden, wobei die Funktionalität des ursprünglich eingesetzten Triisocyanates von dessen Gehalt an difunktionellen Homologen sowie Homologen mit einer Funktionalität > 3 abhängig ist. Bei den besonders bevorzugten trifunktionellen Homologen-Gemischen des MDI liegt die Funktionalität des ursprünglich eingesetzten Triisocyanatgemisches zwischen 2,3 und 3,7, vorzugsweise zwischen 2,55 und 3,45. Grundsätzlich kann

## EP 0 777 695 B2

das Triisocyanat jedoch auch ohne Zusatz von Abbrechern eingesetzt werden. Art und Menge der eingesetzten Abbrecher hängen von der gewünschten Vernetzungsdichte des ausgehärteten Klebstoffes, Dichtstoffes oder Schaumstoffes und/oder der gewünschten Applikationsviskosität ab.

Die Umsetzung des Polyisocyanates mit dem Abbrecher kann in einem separaten Schritt erfolgen oder vorzugsweise in den Fertigungsprozess integriert werden. Dabei ist es nicht notwendig, die Umsetzungsprodukte mit dem Abbrecher aus der Zusammensetzung zu entfernen. Eine nachfolgende Aufarbeitung der Reaktionsmischung, wie sie bei der Herstellung vieler niedrigviskoser Addukte des Standes der Technik notwendig ist, ist hier also nicht erforderlich. Die Reaktionsmischung kann ohne Reinigungsoperationen zu dem entsprechenden Klebstoff, Dichtstoff oder zu der schäumbaren Zusammensetzung konfektioniert werden. Dadurch wird die Herstellung dieser Zusammensetzungen mit geringem Gehalt an monomeren Diisocyanaten und geeignet niedriger Viskosität sehr wirtschaftlich.

Als Polyole zur Herstellung der Prepolymere können alle üblichen Hydroxylgruppen-haltigen Polyester, Polyether oder Polybutadiene mit einer OH-Funktionalität größer oder gleich 2 verwendet werden. Obwohl für die meisten Anwendungsfälle difunktionelle Verbindungen bevorzugt sind, können auch, zumindest in untergeordneten Mengen, höherfunktionelle Polyole mitverwendet werden.

Als Polyester-Polyole können Umsetzungsprodukte von Dicarbonsäuren, bevorzugt aliphatische Dicarbonsäuren mit 4 bis 12 Kohlenstoffatomen im Alkylenrest mit Diolen Anwendung finden, wobei diese Umsetzungsprodukte freie OH-Gruppen zur Reaktion aufweisen müssen. Beispiele für aliphatische Dicarbonsäuren sind Bernsteinsäure, Adipinsäure, Pimelinsäure, Glutarsäure, Azelainsäure, Sebacinsäure, Decandisäure oder Dodecandisäure. Auch aromatische Dicarbonsäuren wie Phthalsäure, Isophthalsäure und Terephthalsäure können verwendet werden. Als zweiwertige Alkohole können Ethylenglykol, Diethylenglykol, Triethylenglykol, 1,2- bzw. 1,3-Propylenglykol, 1,4-Butandiol, 1,6-Hexandiol oder höhere Diole zur Anwendung kommen.

Es können aber auch Polyesterdiole oleochemischer Herkunft verwendet werden, die keine freien Epoxidgruppen aufweisen und durch vollständige Ringöffnung von epoxidierten Triglyceriden eines wenigstens teilweise olefinisch ungesättigten, Fettsäure enthaltenden Fettsäuregemisches mit einem oder mehreren Alkoholen mit 1 bis 12 C-Atomen und anschließender partieller Umesterung der Triglycerid-derivate zu Alkylesterpolyolen mit 1 bis 12 C-Atomen im Alkylrest hergestellt worden sind (siehe DE 3626223).

Als Polyetherole können die nach dem bekannten Verfahren aus einem oder mehreren Alkylenoxiden mit 2 bis 4 Kohlenstoffatomen im Alkylenrest und einem Startermolekül, das 2 oder 3 aktive Wasserstoffatome enthält, hergestellten Produkte Verwendung finden. Geeignete Alkylenoxide sind beispielsweise Tetrahydrofuran, Propylenoxid, 1,2-bzw. 2,3-Butylenoxid und Ethylenoxid. Als Startermoleküle kommen in Betracht: Wasser, Dicarbonsäuren, mehrwertige Alkohole wie Ethylenglykol, Propylenglykol-1,2, Diethylenglykol, Dipropylenglykol und Dimerdiole (Fa. Henkel), Bisphenol A, Resorcin, Hydrochinon, Glycerin oder Trimethylolpropan.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit hydroxyfunktionellen Acrylsäure- und/oder Methacrylsäure-Verbindungen wie Hydroxyethyl(meth)acrylat oder Hydroxypropyl (meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Aus den Polyisocyanaten und den Di- und/oder Polyolen werden auf bekannte Art und Weise die Isocyanat-Prepolymeren hergestellt.

Bei der erfindungsgemäßen Verwendung der Zusammensetzung kann diese ggf. zusätzlich Katalysatoren enthalten, die die Bildung des Polyurethan-Prepolymeren bei seiner Herstellung beschleunigen und/oder die Feuchtigkeitsvernetzung nach der Applikation beschleunigen. Als Katalysatoren eignen sich die normalen Polyurethan-Katalysatoren wie z.B. Verbindungen des 2- bzw 4-wertigen Zinns, insbesondere die Dicarboxylate des 2-wertigen Zinns bzw. die Dialkylzinn-Dicarboxylate bzw. -Dialkoxylate. Beispielhaft seien genannt Dibutylzinndilaurat, Dibutylzinndiacetat, Dioctyl-zinndiacetat, Dibutylzinnmaleat, Zinn(II)-Octoat, Zinn(II)-Phenolat oder auch die Acetylacetonate des 2-bzw. 4-wertigen Zinns. Weiterhin können die hochwirksamen tertiären Amine oder Amidine als Katalysatoren verwendet werden, ggf. in Kombination mit den oben genannten Zinnverbindungen. Als Amine kommen dabei sowohl acyclische als auch insbesondere cyclische Verbindungen in Frage. Beispiele sind das Tetramethylbutandiamin, Bis (Dimethylaminoethyl)ether, 1,4-Diazabicyclooctan (DABCO), 1,8-Diaza-bicyclo-(5.4.0)-Undecen, 2,2'-Dimorpholinodiethylether oder Dimethylpiperazin oder auch Mischungen der vorgenannten Amine.

Vorzugsweise wird Dimorpholinodiethylether oder Bis(dimethylaminoethyl)ether als Katalysator eingesetzt. Er soll nur die Reaktion der NCO-Gruppe mit OH-Gruppen katalysieren sowie die Reaktion der NCO-Gruppe mit Feuchtigkeit, nicht dagegen der Trimerisierung bei der Lagerung.

Weiterhin kann bei erfindungsgemäßer Verwendung der Zusrammensetzung diese ggf. zusätzlich Stabilisatoren enthalten. Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethanprepolymers aus Polyesterbausteinen, werden vorzugsweise Hydrolyse-Stabilisatoren, z.B. vom Carbodiimid-Typ, eingesetzt.

Die weiteren üblichen Zusätze richten sich nach den spezifischen Anwendungsfeldem der Zusammensetzungen und werden daher für jedes Anwendungsfeld gesondert beschrieben.

Werden die Zusammensetzungen als Schmelzklebstoffe, Kaschierklebstoffe oder Kleb-/ Dichtstoffe eingesetzt, so können diese noch klebrigmachende Harze, wie z.B. Abietinsäure, Abietinsäureester, Terpenharze, Terpenphenolharze oder Kohlenwasserstoffharze sowie Füllstoffe (z.B. Silikate, Talk, Calciumcarbonate, Tone oder Ruß), Weichmacher (z.B. Phthalate) oder Thixotropiermittel (z.B. Bentone, pyrogene Kieselsäuren, Harnstoffderivate, fibrilierte oder Pulp-Kurzfasern) oder Farbpasten bzw. Pigmente enthalten.

Bei der Verwendung als Kaschierklebstoff kann zum Erreichen bestimmter zusätzlicher Eigenschaften, wie thermischer und chemischer Beständigkeit noch ein Zusatz von Epoxidharzen, Phenolharzen, Novolacken, Resolen oder Melaminharzen und ähnliches notwendig sein. Außerdem können in diesem Falle die Prepolymeren auch in Lösung hergestellt werden, vorzugsweise in polaren, aprotischen Lösungsmitteln. Die bevorzugten Lösungsmittel haben dabei einen Siedebereich von etwa 50°C bis 140°C. Obwohl auch halogenierte Kohlenwasserstoffe geeignet sind, werden ganz besonders Ethylacetat, Methylethylketon (MEK) oder Aceton bevorzugt.

Bei dem erfindungsgemäßen Einsatz als Primer werden ebenfalls die oben genannten Lösungsmittel mit verwendet.

Beim Einsatz der Zusammensetzung zur Herstellung von Schaumkunststoffen aus Einweg-Druckbehältern enthalten die Zusammensetzungen noch Treibmittel, vorzugsweise werden eingesetzt 1,1,1,2-Tetrafluorethan, 1,1-Difluorethan und Dimethylether. Es können aber auch andere Treibmittel wie Kohlendioxid, Distickstoffoxid, n-Propan, n-Butan und Isobutan eingesetzt werden.

Weiterhin enthalten diese schäumbaren Zusammensetzungen Schaumstabilisatoren, vorzugsweise Siloxan-Oxyalkylen-Copolymere, z.B. Tegostab B 8404 (Fa. Goldschmidt), DABCO DC-190 oder DABCO DC-193 (Fa. Air Products). Darüber hinaus können noch weitere Additive zugesetzt werden, z.B. Lösungsmittel (siehe oben), Flammschutzmittel, Weichmacher, Zellregler, Emulgatoren, Fungizide sowie Füllstoffe, Pigmente und Alterungsschutzmittel.

Bei der Zusammensetzung der NCO-Prepolymeren für die schäumbaren Zusammensetzungen gibt es einen kritischen Punkt. Gemäß Stand der Technik wird nämlich praktisch ohne Ausnahme das Prepolymer direkt in den Druckbehältem aus Gemischen von technischem Diphenylmethan-4,4'-Diisocyanat (MDI) der Funktionalität 2,3 bis 2,7 und aus Polyolen mit einem NCO:OH-Verhältnis von 3-10, vorzugsweise von 4-6: 1 in Gegenwart eines tertiären Amins als Katalysator hergestellt. Wegen des Überschusses an MDI liegt noch viel freies, nicht umgesetztes MDI vor, und zwar in einer Größenordnung von ca. 7 bis 15 Gew.%, bezogen auf den Gesamtinhalt des Druckbehälters. Wegen dieses Gehaltes an monomerem MDI müssen die Zusammensetzungen mit "mindergiftig", "gesundheitsschädlich", "enthält Diphenylmethan-4,4'-Diisocyanat" und dem Gefahrensymbol "Andreaskreuz" gekennzeichnet werden. Würde man anstelle von MDI leichter flüchtige Polyisocyanate zur Herstellung des Prepolymeren einsetzen, so enthielten die Reaktionsmischungen ebenfalls größere Mengen an nicht umgesetztem Diisocyanat. Laut Gefahrstoffverordnung müßten diese Produkte dann sogar mit "giftig" und mit dem Gefahrensymbol "Totenkopf" gekennzeichnet werden. Wegen dieser verstärkten Giftigkeit wurden derartige leicht flüchtige Diisocyanate in Dämm- und Montageschäumen aus Aerosoldosen nicht angewendet. Außerdem sind die Aushärtungszeiten von Prepolymeren aus aliphatischen oder cycloaliphatischen Diisocyanaten zur Verwendung als einkomponentige Dämm- und Montageschäume zu lang. Deshalb wird für diesen Einsatzzweck tatsächlich nur MDI verwendet.

Die aus dem Prepolymeren hergestellten Schaumkunststoffe stellen kein Problem dar, da das freie MDI mit Wasser reagiert und so als Harnstoff-Einheit fest mit dem vernetzten Polyurethan verbunden ist.

Problematisch ist dagegen die Entsorgung von Resten solcher Prepolymeren in den Einweg-Druckbehältern. Nach geltenden abfallrechtlichen Bestimmungen in Deutschland sind sie als Sonderabfall zu entsorgen. Die Kosten für diese Entsorgung steigen wegen begrenzten Deponieraums immer weiter. Es besteht daher ein Bedarf nach Dämm- und Montageschäumen, deren Reste oder Abfall leicht zu entsorgen sind.

Die Herstellung von Polyurethanschaumstoffen als Einkomponentensystem aus einem Druckbehälter unter Verwendung von technischem MDI ist im Prinzip bekannt und wird z.B. in der DE 4025843, der DE 3911784 oder der DE 4303887 beschrieben. Über die Problematik der Entsorgung von Resten der Prepolymeren in den Einweg-Druckbehältern wird in keiner der genannten Schriften zum Stand der Technik eine Angabe gemacht.

Die reaktive Komponente der schäumbaren Zusammensetzung ist durch folgende Merkmale charakterisiert: Sie hat einen Gehalt an Diisocyanat-Monomeren von weniger als 5,0, insbesondere weniger als 2,0, vor allem weniger als 1,0 Gew.%, bezogen auf das Prepolymere. Sie hat eine NCO-Funktionalität von 2 bis 5, insbesondere von 2,5 bis 4,2 und einen NCO-Gehalt von 8 bis 30 Gew.%, insbesondere von 10 bis 23 Gew.%, bezogen auf das Prepolymere sowie eine Viskosität von 5 bis 200, insbesondere von 10 bis 100 Pas bei 25°C nach DIN 53015. Die Prepolymeren werden hergestellt aus Diolen und/oder Polyolen und einem Polyisocyanat mit einer Isocyanat-Funktionalität von 3,0 ± 0,7 mit weniger als 20 Gew.% an Diisocyanat, bezogen auf das Polyisocyanat.

Der Inhalt der Druckgefäße setzt sich quantitativ vorzugsweise folgendermaßen zusammen:

- 50 - 90, vorzugsweise 60 - 85 Gew.% an Isocyanat-Prepolymeren,
- 0,1 - 5,0, vorzugsweise 0,5 - 2,0 Gew.% an Katalysatoren,
- 5 - 35, vorzugsweise 10 - 25 Gew.% an Treibmittel und
- 0,1 - 5,0, vorzugsweise 0,5 - 3,0 Gew.% an Schaumstabilisator.

Von den fakultativen Additiven kann das Flammschutzmittel in einer Menge von 5 bis 50, vorzugsweise von 10 bis 30 Gew.% zugesetzt werden. Die übrigen fakultativen Additive können in einer Menge von 0,1 bis 3,0 Gew.% zugesetzt werden, insbesondere von 0,2 bis 1,5 Gew.%. Die Angaben beziehen sich jeweils auf die Gesamtzusammensetzung.

Die schäumbaren Zusammensetzungen ermöglichen die Herstellung eines Einkomponenten-Kunststoffschaumes, der wie üblich in Umgebungsfeuchtigkeit aushärtet. Aber auch ein Zweikomponenten-Kunststoffschaum ist ohne weiteres möglich, wenn der Zusammensetzung ein Polyol in möglichst equivalenten Mengen oder in einem geringen Unterschuß zugesetzt wird. Bei dem Polyol handelt es sich um üblicherweise eingesetzte Stoffe mit 2 bis 6 C-Atomen und 2 oder 3, vorzugsweise primären OH-Gruppen.

Der so hergestellte Kunststoffschaum eignet sich insbesondere zum Dämmen, Montieren und Dichten im Bauwesen, insbesondere vor Ort.

Nachfolgend wird die Erfindung anhand einiger bevorzugter Ausführungsbeispiele aus den speziellen Anwendungsfeldern näher erläutert, wobei die Auswahl der Beispiele keine Beschränkung des Umfanges des Erfindungsgegenstandes darstellen soll. Die Mengenangaben in den Beispielen sind Gewichtsteile bzw. Gewichtsprozente, wenn nicht anders angegeben.

1. Schäumbare Zusammensetzung zur Herstellung eines Schaumkunststoffes aus Einweg-Druckbehältern

Beispiel 1:

60 g des Polyisocyanates mit einer Funktionalität f von 2,9 und 29,0% NCO, welches durch Phosgenierung eines Anilin-Formaldehyd-Kondensationsproduktes gewonnen wurde und welches ca. 15% MDI-Isomere sowie ca. 12% MDI-Homologe mit F = 4 enthält, wurden mit 10,0 g eines Polyesterdiols mit der OHZ = 10 sowie 10,0 g Tris (2-chlorpropyl)phosphat, 0,4 g Dimorpholinodiethylether (DMDEE) sowie 2,0 g Siloxan-Oxyalkylen-Copolymer (Tegostab B8404) und zuletzt 17,6 g 1,1-Difluorethan gemischt. Die nach der Prepolymerisierung erhaltene Zusammensetzung hatte eine für die Verarbeitung als Einkomponentenschaum günstige Viskosität und führte nach Härtung zu einem Schaumstoff mit folgenden Daten:

| Schaumstruktur | feinzellig |
|---|---|
| Rohdichte, g/l | 28 |
| Dimensionsstabilität (1w, 40°C) | < 3% |
| Brandverhalten DIN 4102 | B2 |

2. Reaktiver Schmelzklebstoff

Beispiel 2:

In einem heizbaren Rührkessel mit Vakuumanschluß werden 133,4 Teile Dynacoll 7360 (kristalliner Polyester, Fa. Hüls), 66,6 Teile Dynacoll 7250 (flüssiger Polyester, Fa. Hüls), 10,79 Teile Benzylalkohol vorgelegt und unter Vakuum 30 Min. bei 130°C entwässert, bis der Wassergehalt unter 250 ppm liegt. Danach wird der Kessel mit Stickstoff begast und anschließend werden 50,37 Teile Thiophosphorsäure-Tris-(p-Isocyanato-Phenylester) zugegeben und Vakuum angelegt. Die Temperatur wird langsam auf 150°C gesteigert und die Reaktion fortgeführt, bis die Isocyanat-Titration einen konstanten Wert ergibt. Anschließend wird das Reaktionsprodukt bei mindestens 140°C bis 150°C in feuchtigkeitsdichte Behälter abgefüllt und diese Behälter sofort verschlossen.

Der Kettenabbruch führt hier zu einer rechnerischen Funktionalität des Isocyanats von 2,0 und bei der Prepolymer-Herstellung lag ein effektives NCO/OH-Verhältnis von 2,1 bezogen auf Polyol-OH vor. Beide Reaktionen erfolgten in diesem Beispiel im Einstufenverfahren.

Der Schmelzklebstoff hatte folgende Eigenschaften: Viskosität bei 150°C: 57,5 Pas (Brookfield-Viskosimeter), der Haftungstest zeigte folgende Resultate (1: sehr gut, 5: unzureichend):

ABS: 1
Hart-PVC: 1
Polystyrol: 1-2
Buchenholz: 1

Beispiel 3:

Analog zu Beispiel 2 wurden aus 133,4 Teilen Dynacoll 7360, 66,6 Teilen Dynacoll 7250, 14,4 Teilen Benzylalkohol und 47,9 Teilen Triphenylmethan-4,4', 4"-Triisocyanat ein Schmelzklebstoff im Einstufenverfahren hergestellt. Durch die Zugabe des Benzylalkohols als Abbrecher wird die Funktionalität des Isocyanats von f = 3,0 auf f = 1,89 reduziert. Das NCO/OH-Verhältnis bezogen auf Polyol und Isocyanat beträgt 2,28/1,0.

Der Schmelzklebstoff hatte bei 150°C eine Viskosität von 30,0 Pas (Brookfield-Viskosität).

Der Restmonomergehalt an monomerem Triphenylmethantriisocyanat betrug 0,3 bis 0,4 Gew.% bezogen auf die Klebstoff-Zusammensetzung. Die Bestimmung erfolgte per Gelpermeationschromatographie (GPC) mit Hilfe von Eichsubstanzen.

Um die Haftungseigenschaften des Schmelzklebstoffes beurteilen zu können, wurden Verklebungen von ABS/ ABS, Hart PVC/Hart PVC, Holz/Holz gemacht.

Fläche A: 25 x 15 x 0,2 mm

Auftragstemperatur: 150°C - 170°C

In Anlehnung an DIN 53283 wurden die Zugscherfestigkeiten mit einer Reißgeschwindigkeit von v = 100 mm/min bestimmt.

| Nach 1 h Raumtemperatur bei RT: | Nach 7 d Raumtemperatur bei RT: |
|---|---|
| ABS: 3,152 N/mm$^2$ | ABS: 4,487 N/mm$^2$ |
| PVC: 2,360 N/mm$^2$ | PVC: 6,613 N/mm$^2$) (Material- |
| Holz: 3,180 N/mm$^2$ | Holz: 6,427 N/mm$^2$) bruch) |

Schälfestigkeiten (180° T-peel-off-Test)

In Anlehnung an DIN 53278 wurde die Schälfestigkeit (bei v = 100 mm/min) bestimmt.

Verklebtes Material: geschäumtes Weich-PVC.

Nach 1 h Raumtemperatur, bei RT:

8,25 - 9,125 N/mm

Vergleichsbeispiel 2a:

Analog zu Beispiel 2 wurde ein Schmelzklebstoff aus 133,4 Teilen Dynacoll 7360, 66,6 Teilen Dynacoll 7250 und 24,96 Teilen MDI hergestellt.

Dieser Schmelzklebstoff hatte bei 150°C eine Viskosität von 4,7 Pa.s (Brookfield). Mit Hilfe der GPC wurde ein Restmonomergehalt von 2,15 Gew.% MDI gefunden.

Bei dem Vergleichsversuch gemäß Stand der Technik wird also ein wesentlich höherer Gehalt an monomerem Isocyanat gefunden. Außerdem ist der Dampfdruck dieses Isocyanats (MDI) noch um etwa eine Größenordnung höher als bei dem erfindungsgemäß eingesetzten Polyisocyanat des Beispiels 2.

Die Schmelzklebstoffe eignen sich für alle gängigen Anwendungen, bei denen reaktive Schmelzklebstoffe Verwendung finden. Beispielhaft seien die Montageverklebung genannt, z.B. die sog. Clipsklebung bei der Montage von Innenverkleidungsteilen im Automobilbau oder die Kantenverklebung bei der Möbelherstellung. Außerdem eignen sich die Schmelzklebstoffe für die flächige Verklebung wie sie z.B. bei der Kaschierung in der Autoindustrie oder bei der Profilummantelung in der Holz- und Möbelindustrie und in anderen Anwendungsbereichen Verwendung finden. Weitere Anwendungsbeispiele sind die Verwendung bei der Herstellung von Büchern zur Buchrückenbeleimung sowie die Verwendung als Beschichtungsmaterial, um beispielsweise Autospiegel mit einem Splitterschutz zu versehen. Auch zur Herstellung von Luft- und Ölfiltern können die erfindungsgemäßen Schmelzklebstoffe eingesetzt werden. Generell können die Schmelzklebstoffe zum Kleben, Dichten, Füllen von Steckern und Kabelverbindungen sowie zum Herstellen von Formteilen in einer spritzgußartigen Applikation verwendet werden.

3. Kaschierklebstoff

Beispiel 4 bis 7:

Die Hydroxyl-Gruppen-haltigen Komponenten gemäß nachfolgender Tabelle 1 wurden in einem heizbaren und kühlbaren Rührkessel vorgelegt und bei 50°C homogenisiert. Nach Zugabe der Isocyanatkomponente wurde bei 90°C weitergerührt, bis der Isocyanatgehalt konstant blieb.

Beispiel 8:

Die Zusammensetzungen gemäß Beispiel 5 in nachfolgender Tabelle 1 wurden analog zu den Beispielen 4 bis 7 hergestellt mit dem Unterschied, daß hier die Reaktion in Ethylacetat bei Rückflußtemperatur des Ethylacetats durchgeführt wurde.

Vergleichsbeispiele 4a bis 8a

Analog zu den Beispielen 4 bis 8 wurde ein Isocyanat-Gruppen-haltiges Prepolymer hergestellt, anstelle des Triphenylmethantriisocyanats und des Benzylalkohols wurde Diphenylmethandiisocyanat (MDI) gemäß Stand der Technik verwendet. In allen Fällen wurden erheblich höhere Restmonomermengen gefunden: Beispiel 4a: 9%, 5a: 9%, 6a: 4%, 7a: 38%, 8a: 1,5%.

Verklebungen:

Mit den Klebstoffen gemäß Beispiel 4 bis 8 bzw. Vergleichsbeispiel 4a bis 8a wurden Verklebungen von verschiedenen Substraten hergestellt, dabei wurden die Zusammensetzungen der Beispiele 4, 4a, 6 und 6a einkomponentig verwendet, für die Zusammensetzungen gemäß Beispiel 5, 5a, 8 und 8a wurde ein hydroxylgruppenhaltiger Härter verwendet, die Zusammensetzungen gemäß Beispiel 7 bzw. 7a dienten als Härterkomponente für einen OH-Gruppenhaltigen Klebstoff. Die Ergebnisse sind in Tabelle 2 zu-

## Tabelle 1

| Beispiel | 4 | 5 | 6 | 7 | 8 |
|---|---|---|---|---|---|
| aromatisch-aliphatischer Polyester, OH-Zahl 60, (Gew.%) | - | 38 | - | - | 30,35 |
| aliphatischer Polyester, OH-Zahl 60, (Gew.%) | - | 12 | - | - | |
| aliphatischer Polyester, OH-Zahl 130, (Gew.%) | 33,59 | - | - | - | - |
| Polypropylenglycol MW 1000, OH-Zahl 109, (Gew.%) | 16,74 | - | 57,84 | 6,75 | 6,78 |
| Benzylalkohol (Gew.%) | 5,78 | 2,8 | 5,84 | 5,3 | 4,92 |
| Triphenylmethan-4,4'-4"-triisocyanate (Gew.%) | 43,88 | 47,2 | 36,58 | 88,5 | 17,96 |
| Ethylacetat (Gew.%) | - | - | - | - | 40 |
| %NCO | 7 | 4,7 | 4,5 | 21,5 | 1,8 |
| restmonomeres Isocyanat (Gew.%) | 1,6 | 1,4 | 0,8 | 5 | 0,3 |
| Festkörpergehalt (Gew.%) | 100 | 100 | 100 | 100 | 60 |
| NCO/OH-Verhältnis | 2,2:1 | 2,5:1 | 1,8:1 | 3,75:1 | 1,6:1 |

EP 0 777 695 B2

Tabelle 2

**verklebtes Substrat**

| Beispiel | Papier, Folie | Folie, Folie | Folie, Metall |
|---|---|---|---|
| 4 | + | + | + |
| 5 | + | − | − |
| 6 | + | + | − |
| 7 | − | + | + |
| 8 | + | + | + |
| 4a | + | + | + |
| 5a | + | − | − |
| 6a | + | + | − |
| 7a | − | + | + |
| 8a | + | + | + |

sammengefaßt. Wie aus dieser Tabelle ersichtlich, sind die Klebstoff-Eigenschaften der erfindungsgemäßen Klebstoffe denen der Klebstoffe gemäß Stand der Technik völlig ebenbürtig. Die Klebstoffe haben jedoch einen erheblich geringeren Anteil an monomerem Isocyanat in der Zusammensetzung. Außerdem ist das monomere Isocyanat der erfindungsgemäßen Zusammensetzungen wesentlich höher im Molekulargewicht, und hat damit einen niedrigeren Dampfdruck als die Isocyanate gemäß Stand der Technik.

Die Kaschierklebstoffe eignen sich für alle gängigen Anwendungen, bei denen reaktive Polyurethan-Kaschierklebstoffe Verwendung finden. Beispielhaft genannt seien die Verklebung bei der Verklebung von Innenverkleidungsteilen im Automobilbau, die Kantenverklebung bei der Möbelherstellung sowie die flächige Verklebung bei der Kaschierung und Profilummantelung in der Holz- und Möbelindustrie sowie in der Elektro- bzw. Elektronikindustrie.

Insbesondere eignen sich die Kaschierklebstoffe zur Kaschierung der verschiedensten Verbundfolien wie z. B. Verklebung von Kunststoff-Folien mit Metallfolien oder auch von Papierbahnen mit Kunststoff-Folien oder Metallfolien. Dabei können die Kunststoff-Folien aus allen gängigen Kunststoffen zur Folienherstellung bestehen, beispielhaft erwähnt seien Polyethylen, Polypropylen, Polyester, PVC, Polyamid oder Polyimid. Als geeignete Metallfolien seien beispielhaft Folien aus Aluminim, Kupfer, Zinn oder Zinn/Bleilegierungen genannt. Dabei können sowohl die Papierbahnen als auch die Kunststoff-Folien oder Metallfolien lackiert oder bedruckt sein. Ein weiteres Anwendungsfeld für die Kaschierklebstoffe ist die Herstellung von Säcken aus blasgeformten oder gewebten Polyethylen- bzw. Polypropylenschläuchen, wobei der Klebstoff zur Verklebung des Boden- bzw. Dekkelbereiches des Sackes dient.

4. Kleb-/Dichtstoff

Beispiel 9:

Herstellung eines Prepolymers

In einem heizbaren Rührkessel werden 2000 g eines Polyoxypropylenetherdiols vom Molekulargewicht 2000 g/ mol, 1000 g eines Polyoxypropylenethertriols vom Molekulargewicht 6000 g/mol sowie 1825 g Diisononylphthalat vorgelegt. Man rührt bei 70°C unter Vakuum und Durchleiten von trockenem Stickstoff etwa 1 h lang, bis der Wassergehalt der Mischung unter 0,05 % liegt. Man fügt 255 g Hexanol-1 hinzu und gibt anschließend unter Stickstoff 917,5 g Triphenylmethan-4,4',4"-Triisocyanat hinzu. Nach erfolgter Homogenisierung werden noch 2,5 ml einer 10%igen Lösung von Zinn(II)octoat in Xylol zugegeben. Nach abgeklungener Exotherme rührt man bei 80°C so lange weiter, bis ein konstant bleibender Isocyanat-Gehalt von etwa 1,7% erreicht wird. Das erhaltene Prepolymer wird in feuchtigkeitsdichte Behälter abgefüllt.

Durch den in diesem Beispiel eingesetzten Kettenabbrecher Hexanol-1 reduziert sich die Funktionalität des eingesetzten Isocyanats rechnerisch auf 2,0. Das effektive NCO-/OH-Verhältnis liegt bei 2,0, bezogen auf die Polyol-OH-Gruppen.

Beispiel 9a: (Vergleichbeispiel)

Analog zu Beispiel 9 wird ein Prepolymer hergestellt, bestehend aus 2000 g des Polyoxypropylenetherdiols vom Molekulargewicht 2000 g/mol, 1000 g des Polyoxypropylenethertriols vom Molekulargewicht 6000 g/mol, 1555 g Diisononylphthalat, 625 g 4,4'-Diphenylmethandiisocyanat (MDI) und 2,5 ml einer 10%igen Lösung von Zinn(II)octoat in Xylol. Ein Kettenabbrecher wird in diesem Fall nicht zugegeben, da ein difunktionelles Isocyanat zum Einsatz kommt. Der NCO-Gehalt des fertigen Prepolymers liegt bei etwa 2,0%. Das NCO/OH-Verhältnis beträgt analog zu Beispiel 1 2,0.

Beispiel 10:

Herstellung einer Kleb-/Dichtmasse mit dem Prepolymer aus Beispiel 9

1500 g des Prepolymers aus Beispiel 9, 348 g Diisononylphthalat, 840 g getrockneter Ruß sowie 300 g feinteilige Kreide werden in einem Planetenmischer unter Vakuum homogen gemischt, wobei sich die Masse auf ca. 60-70°C erwärmt. Anschließend werden 12 g einer 10%igen Lösung von Dibutylzinndilaurat (DBTL) in Diisononylphthalat hinzugefügt und unter Vakuum eingerührt. Man erhält eine pastöse, standfeste Masse, die noch vor dem Abkühlen luftdicht in Kartuschen abgefüllt wird.

Die Hautbildungszeit dieser Kleb-/Dichtmasse beträgt ca. 40 min., die Durchhärtung nach 24 h (Normklima 23/50) liegt bei 3,5 mm. Der Restmonomergehalt an monomerem Triphenylmethantriisocyanat in der Masse wurde mittels Gelpermeationschromatographie zu 0,16 % bestimmt.

Beispiel 10a (Vergleichsbeispiel)

Herstellung einer Kleb-/Dichtmasse mit dem Prepolymer aus Beispiel 9a

Analog zu Beispiel 10 wird aus 1500 g des Prepolymers aus Beispiel 9a, 288 g Diisononylphthalat, 900 g getrocknetem Ruß, 300 g feinteiliger Kreide und 12 g 10%iger DBTL-Lösung eine Kleb-/Dichtmasse hergestellt.

Die Aushärtungseigenschaften dieser Kleb-/Dichtmasse sind sehr ähnlich wie bei Beispiel 10. Der Restmonomergehalt an monomerem MDI wurde zu 0,84% bestimmt.

In Beispiel 10a, das eine Kleb-/Dichtmasse gemäß Stand der Technik darstellt, wird also ein deutlich höherer Gehalt an monomerem Isocyanat gefunden als im erfindungsgemäßen Beispiel 10. Außerdem ist der Dampfdruck dieses Isocyanats (MDI) noch um etwa eine Größenordnung höher als bei dem erfindungsgemäß eingesetzten Polyisocyanat aus Beispiel 10.

Die erfindungsgemäß Verwendeten Kleb-/Dichtstoffe eignen sich für alle gängigen Anwendungen, bei denen reaktive Polyurethan-Kleb-/Dichtmassen Verwendung finden. Dabei kann es sich sowohl um einkomponentige, feuchtigkeitshärtende Produkte handeln, als auch um die schneller abbindenden und für den beschleunigten Festigkeitsaufbau eingesetzten zweikomponentigen Materialien. Ein sehr wichtiger Einsatzbereich für die erfindungsgemäßen Kleb-/Dichtstoffe liegt im Bereich der Automobilindustrie und ihrer Zulieferer. Hier seien beispielhaft die Direktverglasung von Fahrzeugscheiben, die Dachpappen- und Cockpit-Verklebung sowie die Verklebung von Kunststoffteilen genannt. Darüber hinaus haben Polyurethan-Kleb-/Dichtstoffe auch breite Verwendung in der Bauindustrie, der metallverarbeitenden Industrie sowie im Containerbau gefunden.

5. Reaktive Primer

Beispiel 11a: (Vergleichsbeispiel)

In einem geschlossenen Reaktor unter $N_2$-Atmosphäre wurden 80 g eines amorphen, ungesättigten Polyesters (OHZ = 4, Tg>50°C) in 165 g trockenem Butanon unter Rühren vollständig gelöst. Zu der klaren Lösung werden 150 g Ethylacetat und 78 g getrockneter Ruß gegeben und der Ansatz 20 h in einer Kugelmühle dispergiert.

Zu diesem Mahlansatz wird unter starkem Rühren eine Mischung aus 190 g eines Prepolymers aus 82 g 4,4'-Diphenylmethandiisocyanat und 108 g Polyetherpolyol (OHZ = 112) (NCO-Gehalt 9%, Viskosität 10 Pas), 220 g trockenem Propylacetat, 210 g Butanon und 5 g Benzoylchlorid gegeben und anschließend nochmals 1 h in einer Kugelmühle dispergiert.

Beispiel 11:

Analog zu Beispiel 11a aber anstelle des MDI/Polyether-Prepolymeren werden 190 g des Umsetzungsproduktes aus 80 g Triphenylmethan-4,4',4"-Triisocyanat mit 110 g Polyetherpolyol, OH-Zahl 112 (NCO-Gehalt 9%, Viskosität 22 Pas), verwendet.

Beispiel 12:

Wie Beispiel 11 es wird ein Teil der Isocyanatgruppen im Prepolymer mit 10 g n-Hexanol abgesättigt. (NCO-Gehalt 7%, Viskosität 12 Pas).

Beispiel 13:

Wie Beispiel 11 ein Teil der Isocyanatgruppen des Prepolymers wird mit 20 g N-Methyl-3-aminopropyltrimethoxysilan umgesetzt (NCO-Gehalt 6%, Viskosität 14 Pas).

Versuchsergebnisse:

a) Viskositäten der Primer (Ford-Becher 4, 23°C)

| Beispiel | Auslaufzeit/s |
|----------|---------------|
| 11a | 15 |
| 11 | 20 |
| 12 | 14 |
| 13 | 15 |

b) Gitterschnittprüfung nach Lagerung eines 50µm (naß) Aufstriches für 24 h bei 23°C und 50% RF

| Beispiel | Gitterschnitt-Kennwert gemäß DIN 53151 |
|----------|------------------------------------------|
| 11a | GT 0 |
| 11 | GT 0 |
| 12 | GT 0 |
| 13 | GT 0 |

c) Haftungsprüfung auf 1. weißer Unidecklack und 2. grauer Metallic-Lack

| Beispiel | nach 7d NK | nach 7d NK und 7d 70°C/10%RF |
|----------|------------|------------------------------|
| 11a | 100% kohäsiv | 100% kohäsiv |
| 11 | "        " | "        " |
| 12 | "        " | "        " |
| 13 | "        " | "        " |

Anmerkung

NK =     Normklima (23°C/50% relative Luftfeuchtigkeit)
RF =     relative Luftfeuchtigkeit

Die Primer eignen sich für viele gängige Anwendungen, bei denen reaktive Primer notwendig sind, insbesondere aber als Haftungsvermittler auf Automobildecklacken, wie sie z.B. bei der Direktverglasung eingesetzt werden. Aus den vorhergehenden Versuchsergebnissen wird deutlich, daß die Primer (Beispiele 11 - 13) in allen anwendungstechnischen Prüfungen dem Primer gemäß Stand der Technik (Beispiel IIa) ebenbürtig sind. Die Primer weisen jedoch einen deutlich niedrigeren Restmonomergehalt auf. Außerdem weist das Triisocyanat noch eine um etwa eine Größenordnung niedrigeren Dampfdruck auf als das MDI gemäß Stand der Technik.

**Patentansprüche**

1.    Verwendung von Zusammensetzungen auf der Basis von Polyolen, Polyisocyanaten und ggf. monofunktionellen Verbindungen (Abbrechern) mit gegenüber Isocyanaten reaktiven Gruppen, **dadurch gekennzeichnet, daß** das Polyisocyanat eine Isocyanat-Funktionalität von $3,0 \pm 0,7$ hat und weniger als 20 Gew.% an Diisocyanat, bezogen auf das eingesetzte Polyisocyanat, enthält, wobei der Anteil an tetrafunktionellen Isocyanaten nicht mehr als 12 Gew% und der Anteil an höherfunktionellen Polyisocyanaten nicht mehr als 2 Gew.% des Polyisocyanat-Gemisches beträgt, zur Herstellung von Schaumkunststoffen aus Einwegdruckbehältern, Kleb-/ Dichtstoffen, reaktiven Schmelzklebstoffen, Kaschierklebstoffen oder Primern .

2.    Verwendung der Zusammensetzung nach Anspruch 1, **dadurch gekennzeichnet, daß** das Polyisocyanat aus der Gruppe der

-    trifunktionellen Homologen des Diphenylmethandiisocyanat (MDI)
-    Triphenylmethan-4,4',4"triisocyanat
-    Thiophosphorsäure-tris-(p-isocyanato-)phenylester
-    Trimerisationsprodukte des MDI, oder Toluylendiisocyanat (TDI)
-    aliphatischen Triisocyanate
-    Biuretisierungsprodukt des Hexamethylendiisocyanat (HDI)
-    Trimerisierungsprodukt (Isocyanurat) des HDI
-    Isocyanurat des Isophorondiisocyanats (IPDI)
-    Addukten aus Diisocyanaten und niedermolekularen Triolen,

ausgewählt wird.

3. Verwendung der Zusammensetzung nach Anspruch 1, **dadurch gekennzeichnet, daß** das Polyisocyanat direkt durch Kondensation von Formaldehyd und Anilin mit nachfolgender Phosgenierung hergestellt wurde.

4. Verwendung der Zusammensetzung nach mindestens einem der vorhergehenden Ansprüche, **dadurch gekennzeichnet, daß** die Funktionalität des Polyisocyanats durch Zusatz von Abbrechern ausgewählt aus der Gruppe monofunktioneller Alkohole mit bis zu 36 C-Atomen, monofunktionel-ler primärer und/oder sekundärer Amine und/oder Mer-captane mit bis zu 36 C-Atomen, oder Mischungen aus Poly-Alkoholen und/oder Poly-Aminen und/oder Poly-Mercaptanen mit einer Funktionalität kleiner als 2 auf einen Wert zwischen 1,3 und 3,45 eingestellt wird.

5. Verwendung der Zusammensetzung nach mindestens einem der vorhergehenden Ansprüche, **dadurch gekennzeichnet, daß** als Polyole Polyetherdiole und/oder Polyethertriole und/oder lineare und/oder schwach verzweigte Polyesterpolyole und/oder lineare und/oder schwach verzweigte Acrylester-Copolymer-Polyole und/oder aromatische Polyetherdiole oder Polyole verwendet werden.

6. Verwendung der Zusammensetzungen gemäß mindestens einem der vorhergehenden Ansprüche zur Herstellung von Schaumkunststoffen aus Einweg-Druckbehältern, **dadurch gekennzeichnet, daß** die Zusammensetzung vor der Anwendung folgende Komponenten enthält:

A) als reaktive Komponente mindestens ein IsocyanatPrepolymer mit einem Gehalt an Diisocyanat-Monomeren von weniger als 5,0 Gew.%, bezogen auf das Prepolymere, mit einer NCO-Funktionalität von 2 bis 5, mit einem NCO-Gehalt von 8 bis 30 Gew.%, bezogen auf das Prepolymere und mit einer Viskosität von 5 bis 200 Pa.s bei 25°C nach DIN 53015, wobei das Prepolymere hergestellt wurde aus einem Triisocyanat
mit einer Isocyanat-Funktionalität von 3,0 ± 0,7 mit weniger als 20 Gew.% an Diisocyanat, bezogen auf das eingesetzte Polyisocyanat.
B) mindestens einen Katalysator für die Reaktion der Isocyanat-Gruppe mit HO-Gruppen,
C) mindestens ein Treibmittel mit Kp < -10°C bei 1013mbar,
D) mindestens einen Schaumstabilisator sowie
E) ggf. Additive wie Lösungsmittel, Flammschutzmittel und Weichmacher.

7. Verwendung der Zusammensetzung gemäß Anspruch 6, **gekennzeichnet durch** folgende Mengenangaben:

- 50 bis 90 Gew.% des Prepolymeren,
- 0,1 bis 5,0 Gew.% des Katalysators,
- 5 bis 35 Gew.% des Treibmittels,
- 0,1 bis 5,0 Gew.% des Schaumstabilisators und
- 0 bis 51,5 Gew.% an Additiven.

8. Verwendung der Zusammensetzung gemäß Anspruch 6 oder 7, **dadurch gekennzeichnet, daß** bis zu 50% der NCO-Prepolymeren des Triisocyanats durch monomerarm (< 5%, insbesondere < 0,5%) hergestellte NCO-Prepolymere aus TDI, HDI, IPDI und Diolen des MG 60-3000 oder durch monomerarm (< 5%, insbesondere < 0,5%) hergestellte Cyclotrimerisate von aliphatischen Diisocyanaten mit 4 bis 12 C-Atomen oder durch Prepolymere aus MDI mit einem Gehalt von 50 bis 90% 2,4-MDI und Diolen des MG 60-3000, wobei deren Monomergehalt durch entsprechende Reaktionsführung auf < 1% eingestellt werden sollte, ersetzt werden.

9. Verwendung der Zusammensetzung gemäß mindestens einem der Ansprüche 1 bis 5 als einkomponentiger feuchtigkeitshärtender oder zweikomponentiger Kleb- /Dichtstoff zur Montageverklebung, flächigen Verklebung und/oder Beschichtung.

10. Verwendung der Zusammensetzung gemäß mindestens einem der Ansprüche 1 bis 5 als reaktiver Schmelzklebstoff zur Montageverklebung, flächigen Verklebung und/oder Beschichtung.

11. Verwendung der Zusammensetzung gemäß mindestens einem der Ansprüche 1 bis 5 als lösungsmittelfreier oder lösungsmittelhaltiger Kaschier-Klebstoff zur Montageverklebung, flächigen Verklebung und/oder Beschichtung von Papier, Kunststoff-Folien, Metallfolien, Geweben, Vliesstoffen oder anderen bahnförmigen Materialien, wobei diese ggf. bedruckt und/oder lackiert sein können.

12. Verwendung nach Anspruch 11, **dadurch gekennzeichnet, daß** die Zusammensetzung gemäß mindestens einem der Ansprüche 1 bis 5 als Härter für eine Hydroxylgruppenhaltige, Aminogruppen-haltige, Epoxygruppen-haltige und/oder Carboxylgruppen-haltige Klebstoffkomponente dient.

13. Verwendung der Zusammensetzung gemäß mindestens einem der Ansprüche 1 bis 5 als lösungsmittelhaltiger oder lösungsmittelfreier Primer (Voranstrich) bei der Montageverklebung, flächigen Verklebung und/oder Beschichtung von Substraten.

14. Verwendung eines ein- oder zweikomponentigen Kunststoffschaums, herstellbar aus der Zusammensetzung nach mindestens einem der Ansprüche 6 bis 8 als Dämm- und Montageschaum, wobei der Kunststoffschaum vorzugsweise vor Ort erzeugt wird.

**Claims**

1. The use of compositions based on prepolymers produced from polyols, polyisocyanates and, optionally, monofunctional compounds (terminators) containing isocyanate-reactive groups, **characterized in that** the polyisocyanate has an isocyanate functionality of $3.0 \pm 0.7$ and contains less than 20% by weight of diisocyanate, based on the polyisocyanate used, its content of tetrafunctional isocyanates being no more than 12% by weight and its content of higher polyisocyanates being no more than 2% by weight of the polyisocyanate mixture, for the production of foam plastics for the production of foam plastics from non-reusable pressurized containers, adhesives/sealants, reactive hotmelt adhesives, laminating adhesives or primers.

2. The use of the composition as claimed in claim 1, **characterized in that** the polyisocyanate is selected from the group consisting of

    - trifunctional homologs of diphenyl methane diisocyanate (MDI),
    - triphenyl methane-4,4',4"-triisocyanate,
    - thiophosphoric acid tris-(p-isocyanato)-phenyl ester,
    - trimerization products of MDI or toluene diisocyanate (TDI),
    - aliphatic triisocyanates

        - biuretization product of hexamethylene diisocyanate (HDI)
        - trimerization product (isocyanurate) of HDI
        - isocyanurate of isophorone diisocyanate (IPDI),

    - adducts of diisocyanates and low molecular weight triols.

3. The use of the composition as claimed in claim 1, **characterized in that** the polyisocyanate was directly produced by condensation of formaldehyde and aniline with subsequent phosgenation.

4. The use of the composition as claimed in at least one of the preceding claims, **characterized in that** the functionality of the polyisocyanate is adjusted to a value of 1.3 to 3.45 by addition of terminators selected from the group consisting of monohydric alcohols containing up to 36 carbon atoms, monofunctional primary and/or secondary amines and/or mercaptans containing up to 36 carbon atoms or mixtures of polyalcohols and/or polyamines and/or polymercaptans with a functionality of less than 2.

5. The use of the composition as claimed in at least one of the preceding claims, **characterized in that** polyether diols and/or polyether triols and/or linear and/or lightly branched polyester polyols and/or linear and/or lightly branched acrylate copolymer polyols and/or aromatic polyether diols or polyols are used as the polyols.

6. The use of the compositions claimed in at least one of the preceding claims for the production of foam plastics from non-reusable pressurized containers, **characterized in that**, before application, the composition contains the following components:

    A) as reactive component, at least one isocyanate prepolymer with a content of diisocyanate monomers of less than 5.0% by weight, based on the prepolymer, an NCO functionality of 2 to 5, an NCO content of 8 to 30% by weight, based on the prepolymer, and a viscosity of 5 to 200 Pa.s at 25°C (according to DIN 53015), the prepolymer being produced from a triisocyanate with an isocyanate functionality of $3.0 \pm 0.7$ containing less than 20% by weight of diisocyanate, based on the polyisocyanate used,

B) at least one catalyst for the reaction of the isocyanate group with OH groups,
C) at least one blowing agent with a Bp. of < -10°C at 1013 mbar,
D) at least one foam stabilizer and
E) optionally additives, such as solvents, flameproofing agents and plasticizers.

7. The use of the composition as claimed in claim 6, **characterized by** the following quantities:

   - 50 to 90 % by weight of the prepolymer,
   - 0.1 to 5.0% by weight of the catalyst,
   - 5 to 35 % by weight of the blowing agent,
   - 0.1 to 5.0% by weight of the foam stabilizer and
   - 0 to 51.5% by weight of additives.

8. The use of the composition as claimed in claim 6 or 7, **characterized in that** up to 50% of the NCO prepolymers of the triisocyanate are replaced by low-monomer (<5%, more particularly < 0.5%) NCO prepolymers of TDI, HDI, IPDI and diols with a molecular weight of 60 to 3000 or by low-monomer (<5%, more particularly < 0.5%) cyclotrimers of aliphatic diisocyanates containing 4 to 12 carbon atoms or by prepolymers of MDI with a content of 50 to 90% of 2,4-MDI and diols with a molecular weight of 60 to 3000, their monomer content having to be adjusted to less than 1% by suitable control of the reaction.

9. The use of the composition as claimed in at least one of claims 1 to 5 as a one-component moisture-curing or two-component adhesive/sealing compound for assembly bonding, large-area bonding and/or coating.

10. The use of the composition as claimed in at least one of claims 1 to 5 as a reactive hotmelt adhesive for assembly bonding, large-area bonding and/or coating.

11. The use of the composition as claimed in at least one of claims 1 to 5 as a solventless or solvent-containing lamination adhesive for assembly bonding, large-area bonding and/or for the coating of paper, plastic films, metal foils, woven fabrics, nonwovens or other web-like materials which may optionally be printed and/or lacquered.

12. The use claimed in claim 11, **characterized in that** the composition claimed in at least one of claims 1 to 5 is used as hardener for an adhesive component containing hydroxyl groups, amino groups, epoxy groups and/or carboxyl groups.

13. The use of the composition claimed in at least one of claims 1 to 5 as a solventless or solvent-free primer in assembly bonding, large-area bonding and/or the coating of substrates.

14. The use of a one- or two-component plastic foam obtainable from the composition claimed in at least one of claims 6 to 8 as an insulating and assembly foam, the plastic foam preferably being produced in situ.

**Revendications**

1. Utilisation de compositions à base de prépolymères, eux-mêmes préparés à partir de polyols, de polyisocyanates et, éventuellement, de composés monofonctionnels (agents de rupture), renfermant des groupes réactifs vis-à-vis des isocyanates, **caractérisée en ce que** le polyisocyanate possède une fonctionnalité d'isocyanate de $3 \pm 0{,}7$ et renferme moins de 20 % en poids de diisocyanate par rapport au polyisocyanate mis en oeuvre, la proportion des isocyanates tétrafonctionnels n'étant pas supérieure à 12 % en poids et celle des polyisocyanates de fonctionnalité plus élevée n'excédant pas 2 % en poids du mélange de polyisocyanates, pour la fabrication de mousses plastiques issues de récipients sous pression é usage unique, de colles-matières d'étanchéité, de colles à fusion réactives, de colles de contrecollage ou de couches de fond.

2. Utilisation de la composition selon la revendication 1, **caractérisée en ce que** le polyisocyanate est sélectionné parmi le groupe constitué des

   - homologues trifonctionnels du diiosocyanate de diphénylméthane (MDI)
   - 4,4',4"-triisocyanate de triphénylméthane
   - tris-(p-isocyanato)-phénylester d'acide thiophosphorique

- produits de trimérisation du MDI, ou diisocyanate de toluylène (TDI)
- triisocyanates aliphatiques

  - produit de biuretisation du diisocyanate d'hexaméthylène (HDI)
  - produit de trimérisation (isocyanurate) de l'HDI

- isocyanurate du diisocyanate d'isophorone (IPDI)
- adduits de diisocyanates et de triols de bas poids moléculaire.

**3.** Utilisation de la compassion selon la revendication 1, **caractérisée en ce que** le polyisocyanate est fabriqué directement par condensation d'aldéhyde formique et d'aniline suivie de phosgénation.

**4.** Utilisation de la composition selon au moins une des revendications qui précèdent, **caractérisée en ce que** la fonctionnalité du polyisocyanate est ajustée à une valeur comprise entre 1,3 et 3,45 par l'addition d'agents de rupture sélectionnés parmi le groupe des alcools monofonctionnels comportant jusqu'à 36 atomes de carbone, des amines primaires et/ou secondaires monofonctionnelles présentant jusqu'à 36 atomes de carbone et/ou des mercaptans monofonctionnels possédant jusqu'à 36 atomes de carbone, ou des mélanges de polyalcools et/ou de polyamines et/ou de polymercaptans possédant une fonctionnalité inférieure à 2.

**5.** Utilisation de la composition selon au moins une des revendications qui précèdent, **caractérisée en ce que** l'on met en oeuvre comme polyols, des polyétherdiols et/ou des polyéthertriols et/ou des polyesterpolyols linéaires et/ou légèrement ramifiés et/ou des polyols de copolymères d'esters acryliques linéaires et/ou légèrement ramifiés et/ou des polyétherdiols ou des polyols aromatiques.

**6.** Utilisation des compositions conformes à au moins une des revendications qui précèdent pour la fabrication de mousses plastiques à partir de récipients sous pression à usage unique, **caractérisée en ce que** la composition renferme avant l'application les composants suivants:

A) Comme composant réactif, au moins un prépolymère d'Isocyanate présentant une teneur en monomères de diisocyanate inférieure à 5,0 % en poids par rapport au prépolymère, une fonctionnalité NCO de 2 à 5, une teneur en NCO de 8 à 30 % en poids, par rapport au prépolymère ainsi qu'une viscosité de 5 à 200 m.Pas à 25 °C selon DIN 53015, le prépolymère ayant été fabriqué à partir d'un triisocyanate possédant une fonctionnalité d'isocyanate de $3,0 \pm 0,7$ avec moins de 20 % en poids de diisocyanate, par rapport au polyisocyanate mis en oeuvre.

B) au moins un catalyseur pour la réaction du groupe isocyanate avec les groupes OH,

C) au moins un agent propulseur possédant un point d'ébullition inférieur à -10 °C à 1013 mbars,

D) au moins un stabilisant de mousse, ainsi que

E) éventuellement des additifs, tels que solvants, agents pare-flammes et plastifiants.

**7.** Utilisation de la composition selon la revendication 6, **caractérisée par** les spécifications de quantités suivantes:

- 50 à 90 % en poids du prépolymère,
- 0,1 à 5,0 % en poids du catalyseur,
- 5 à 35 % en poids de l'agent propulseur,
- 0,1 à 5,0 % en poids du stabilisant de mousse et
- 0 à 51,5 % en poids d'additifs.

**8.** Utilisation de la composition selon la revendication 6 ou 7, **caractérisée en ce que** jusqu'à 50 % en poids des prépolymères de NCO du triisocyanate sont remplacés par des prépolymères de NCO fabriqués avec une faible teneur en monomères (< 5 %, en particulier < 0,5 %) à partir de TDI, d'HDI, d'IPDI et de diols possédant un PM de 60 à 3000, ou par des cyclotrimères fabriqués avec une faible teneur en monomères (< 5 %, en particulier < 0,5 %) de diisocyanates aliphatiques comportant 4 à 12 atomes de C, ou par des prépolymères de MDI renfermant 50 à 90 % de 2,4-MDI et de diols possédant un PM de 60 à 3000, leur teneur en monomères étant ajustée à < 1 % par une conduite appropriée de la réaction.

**9.** Utilisation de la composition selon une des revendications 1 à 5 comme matière de collage et d'étanchéité à un composant durcissant à l'humidité ou à deux composants pour le collage de montage, le collage en surface et/ou l'enduction.

10. Utilisation de la composition selon une des revendications 1 à 5 comme colle à fusion réactive pour le collage de montage, le collage en surface et/ou l'enduction.

11. Utilisation de la composition selon une des revendications 1 à 5 comme colle de contrecollage exempte ou à base de solvant pour le collage de montage, le collage en surface et/ou l'enduction de papier, de feuilles en matière plastique, de feuilles en métal, de tissus, de non-tissés ou d'autres matières en bandes, celles-ci pouvant éventuellement être imprimées et/ou laquées.

12. Utilisation selon la revendication 11, **caractérisée en ce que** la composition conforme à au moins une des revendications 1 à 5 sert de durcisseur pour un composant de colle renfermant des groupes hydroxyle, amino, époxy et/ou carboxyle.

13. Utilisation de la composition selon au moins une des revendications 1 à 5 comme couche de fond (couche d'apprêtage) à base ou exempte de solvant pour le collage de montage, le collage en surface et/ou l'enduction de substrats.

14. Utilisation d'une mousse plastique à un ou à deux composants, obtenable à partir de la composition selon au moins une des revendications 6 à 8, comme mousse d'isolation et de montage, la mousse plastique étant fabriquée de préférence sur place.